# FASCICULE DE BREVET EUROPEEN

(11) **EP 1 654 897 B1**
(45) Date de publication et mention de la délivrance du brevet: **18.04.2007**
(21) Numéro de dépôt: 04786377.4
(22) Date de dépôt: 09.08.2004
(51) Int. Cl.: H04Q 7/32, H04M 1/725

(54) **CONFIGURATION D'UN TELEPHONE PORTABLE SANS TOUCHE PAR SMS**
KONFIGURATION EINES TRAGBAREN SCHLÜSSELLOSEN TELEFONS DURCH SMS
CONFIGURATION OF A PORTABLE KEYLESS TELEPHONE BY SMS

(30) Priorité: 13.08.2003 FR 0350428
(43) Date de publication de la demande: 10.05.2006
(73) Titulaire: Modelabs Limited, Hong Kong (CN)
(72) Inventeur: ASSEO, Pierre, Shangai 200040 (CN)
(74) Mandataire: Grynwald, Albert
(86) Numéro de dépôt international: PCT/FR2004/050379
(87) Numéro de publication internationale: WO 2005/018258

(56) Documents cités:
- WO-A-01/30055
- WO-A-01/91428
- FR-A- 2 794 917
- US-A1- 2002 098 874

## Description

L'invention est relative à un téléphone portable.

L'utilisation des téléphones portables modernes (aussi appelés téléphones cellulaires ou téléphones mobiles) est courante aujourd'hui. Mais cette utilisation se révèle complexe pour certains utilisateurs car les fonctions sont nombreuses, accessibles par des menus dont la manipulation nécessite un apprentissage et, quelquefois, de la dextérité. Par ailleurs, la taille des boîtiers des téléphones a tendance à diminuer, ce qui entraîne une réduction de la taille des touches de numérotation et leur actionnement devient plus difficile.

Ainsi il apparaît que l'utilisation des téléphones portables par des personnes dont les capacités ne sont pas celles d'une personne adulte en parfaite santé n'est pas aisée.

Il est connu par le document US 2002/098874 un téléphone portable comprenant des touches dont l'actionnement de chacune permet un appel vers un numéro donné, ce téléphone comportant des moyens pour recevoir du réseau des commandes de configuration.

L'invention a donc pour but de fournir un téléphone mobile dont l'utilisation est aisée.

L'invention concerne ainsi, selon un premier de ses aspects, un téléphone portable comportant, en lieu et place du clavier permettant la composition des numéros de téléphone, un clavier composé d'un nombre limité de touches, sensiblement inférieur au nombre de touches d'un clavier usuel. Chacune des touches correspond à un numéro de téléphone précis, de préférence programmable. Par la suite, on nommera ces touches quelquefois « PRESET ».

L'utilisation du téléphone sera donc limitée à l'appel de numéros déterminés. Ainsi lors de l'utilisation, notamment par des enfants, la consommation est maîtrisée. En outre, ce téléphone présente un caractère dissuasif à l'égard de potentiels voleurs ou receleurs, car un téléphone dont l'utilisation est limitée à l'appel de personnes déterminées ne présente aucun intérêt pour une autre personne. Pour renforcer la sécurité contre le vol, dans une réalisation, on affecte au téléphone un numéro, par exemple en mémoire d'une carte, et ce numéro permet l'authentification du téléphone pour avoir accès à différents services dont celui permettant la programmation ou la re-programmation des touches "PRESET".

Dans un exemple préféré de réalisation, les touches ont une dimension supérieure à celle d'un téléphone classique.

Ces touches peuvent présenter une partie permettant une personnalisation. Ainsi, il est possible d'associer à la touche un symbole, un dessin, une photo ou une autre indication mentionnant ou évoquant la personne ou le service dont le numéro est configuré pour cette touche.

L'utilisation du téléphone selon l'invention est alors accessible à tous, même à des très jeunes enfants ou des personnes âgées peu familières avec les nouvelles technologies. Il suffit, en effet, pour téléphoner à une des personnes dont le numéro est préconfiguré, d'appuyer sur la touche représentant la personne que l'on désire joindre, puis de presser une touche déclenchant l'appel. De préférence, dans le cas où les touches sont programmables, le téléphone comporte des moyens pour recevoir du réseau de télécommunication des commandes de configuration permettant d'attribuer un numéro d'appel à chacune des touches programmables.

Ainsi, l'invention concerne, de façon générale, un téléphone portable qui est caractérisé en ce qu'étant dépourvu de clavier de composition de numéros, il comporte un nombre limité de touches, par exemple de l'ordre de cinq, dont l'actionnement de chacune permet un appel vers un numéro déterminé.

De préférence, les touches dont l'actionnement de chacune permet un appel vers un numéro déterminé sont programmables et le téléphone comporte des moyens pour recevoir du réseau de télécommunication des commandes de configuration permettant d'attribuer un numéro d'appel à chacune des touches programmables. Dans ce cas, selon une réalisation, le téléphone comporte une mémoire contenant un code, lié au téléphone, d'autorisation d'accès à un service de commande de configuration permettant d'attribuer un numéro d'appel aux touches programmables.

Les moyens de réception des commandes de configurations des touches programmables comportent, par exemple, des moyens de réception de messages SMS.

Dans un mode de réalisation, le téléphone comporte un moyen pour émettre, par message SMS, vers un serveur, des données préenregistrées pour obtenir l'autorisation qu'un serveur ou opérateur lui adresse des commandes de configuration.

Selon une réalisation, le téléphone portable comporte des moyens pour adresser à un serveur audiotel à reconnaissance vocale, par un message vocal, les numéros d'appel correspondant aux touches programmables.

Les touches dont l'actionnement permet l'appel vers un numéro déterminé présentent, par exemple, une partie pourvue de moyens permettant la personnalisation de ces touches à l'aide d'un symbole rappelant l'interlocuteur correspondant au numéro vers lequel la touche permet l'appel.

Le téléphone portable comporte, dans une réalisation, au moins une touche d'accès à des services proposés par l'opérateur, notamment une touche d'accès à des messages vocaux ou SMS.

Dans ce cas, lors des communications vers un serveur audiotel, de préférence, les touches dont l'actionnement de chacune permet un appel vers un numéro déterminé se comportent comme les premières touches d'un clavier de composition de numéro, permettant ainsi l'utilisation des services audiotels interactifs en envoyant des signaux DTMF.

L'invention concerne aussi un système pour la programmation des touches d'un téléphone portable du type défini ci-dessus qui est caractérisé en ce qu'il comporte un serveur recevant les numéros à programmer par message vocal, par message SMS provenant d'un autre téléphone ou par un message communiqué par une voie IP.

D'autres caractéristiques et avantages de l'invention apparaîtront avec la description effectuée ci-dessous, à titre non limitatif, en référence au dessin ci-joint sur lequel:

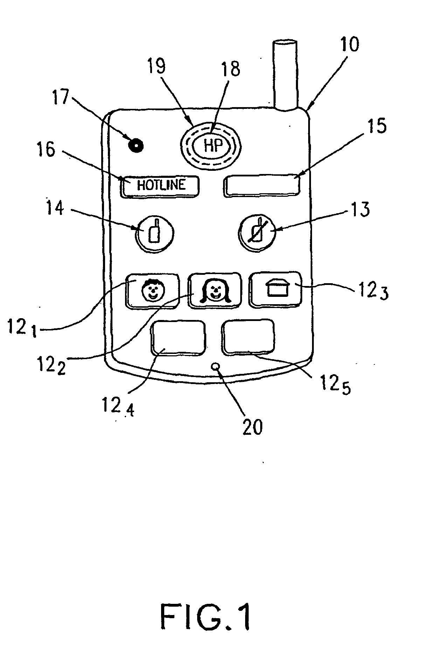

La figure 1 est une vue d'ensemble d'un téléphone portable conforme à l'invention.

Dans le mode de réalisation qui est représenté sur la figure 1, le téléphone portable 10 comporte une partie principale avec un clavier à cinq touches d'appel 12₁ à 12₅ dont chacune a des dimensions supérieures aux dimensions d'une touche d'un clavier numérique usuel de composition des numéros de téléphones.

Aux touches d'appel 12₁ à 12₅ sont associés des symboles représentant les personnes ou services à appeler.

Le téléphone comporte aussi cinq autres touches de commande, à savoir une touche 14 permettant de confirmer l'appel, une touche 13 de refus ou fin d'appel, une touche 15 de boite vocale (mail box), une touche 16 d'accès à des services ou "hot line" et une touche 18 de mise en marche et d'arrêt d'un haut-parleur. Chaque touche est associée à un indicateur lumineux. Le téléphone comporte aussi un indicateur lumineux 17 à trois couleurs dont la première représente la bonne marche du téléphone. La seconde couleur s'affiche quand le téléphone se trouve hors de la couverture de l'opérateur et la troisième couleur apparaît quand la batterie doit être rechargée. Enfin, le téléphone comprend un haut-parleur 19 et un micro-phone 20.

Pour des raisons de coût le téléphone est dépourvu d'écran.

La mise sous tension du téléphone est réalisée par pression sur la touche 14. Une temporisation de trois secondes est requise pour éviter toute mise en route intempestive. La mise en route est validée par l'allumage de tous les indicateurs lumineux du téléphone pour une durée de l'ordre d'une seconde. Pour placer un appel, il suffit alors d'actionner l'une des touches 12₁ à 12₅.

Etant donné que le téléphone ne présente pas d'intérêt pour d'autre personnes que son utilisateur, il n'est pas nécessaire de protéger son utilisation par l'introduction d'un code personnel (PIN : Personal Indentification Number).

Si, lors de la mise en route du téléphone, la carte SIM est absente, l'indicateur lumineux 17 se met à clignoter pendant une durée de cinq secondes et la touche 16 « Hot line » est automatiquement configurée pour appeler un numéro d'appel vers un service d'urgence.

Etant donné que, dans l'exemple, les touches 12₁ à 12₅ sont programmables, on prévoit que le téléphone comporte des moyens pour recevoir, du réseau, des signaux de programmation de ces touches permettant que chacune corresponde à un numéro d'appel déterminé. Ainsi l'utilisation du téléphone est liée à des services fournis par un opérateur.

Dans ces conditions, lors de la première utilisation du téléphone, il est prévu, pour avoir accès aux services associés à l'invention, de s'enregistrer auprès de l'opérateur. Dans un exemple cet enregistrement s'effectue principalement lors de l'achat, le téléphone comportant une carte SIM dans laquelle sont mémorisés le numéro de téléphone et le code de l'opérateur. Par ailleurs, sont mémorisés dans une autre mémoire du téléphone: le numéro de série (IMEI) du téléphone fourni par le fabricant et un autre code dit de « Service » unique par téléphone permettant de référencer le téléphone pour l'autorisation d'accès à un ensemble de services qui sont dédiés au type de téléphone selon l'invention. Ce code ou numéro est fourni par la société de service qui opère le serveur de l'opérateur.

La première étape de l'enregistrement consiste, pour l'utilisateur, à envoyer un message SMS vers un serveur (non montré). L'envoi de ce SMS est déclenché par un premier appui sur la touche 16 « hotline », qui reste active pendant cinq secondes environ, puis par un appui sur la touche 15 de « boite à lettre » ou « mailbox ». L'envoi du message SMS est confirmé par un clignotement des touches 15 et 16 pendant trois secondes environ. Le message SMS contient un en-tête représentant l'enregistrement, et les données suivantes : le code IMEI (numéro de série), le code unique d'accès aux services, le numéro de téléphone de l'utilisateur et, enfin, le code international de l'opérateur.

La seconde étape de l'enregistrement est réalisée du côté de l'opérateur. Celui-ci, sur les informations qu'il a reçues, authentifie ou non l'utilisateur et lui donne, en cas d'authentification, un accès complet aux services proposés. Si le message SMS contient des données incohérentes, par exemple si le numéro de téléphone (sur la carte SIM) ne correspond pas au numéro de série du téléphone alors le téléphone n'est pas enregistré. Cette situation se produit par exemple lorsque la carte SIM a été remplacée par un voleur.

Dans le cas où le téléphone a été acheté sans abonnement, les touches 15 et 16 ne sont alors pas préconfigurées en usine et le serveur envoie au téléphone un SMS de configuration permettant d'affecter à ces touches 15 et 16 des numéros d'accès correspondant aux services du pays concerné.

Dans un exemple de réalisation, la procédure de programmation des touches d'appel 12₁ à 12₅ est prévue pour être réalisée selon trois moyens distincts.

Selon un premier moyen, la programmation des touches « PRESET » 12ᵢ est réalisée en pressant la touche 16 de service « HOTLINE ». Cette pression déclenche un appel vers le service audiotel de l'opérateur. L'utilisateur entre ensuite le code unique d'accès aux services qui, rappelons-le, est lié au téléphone. Ce code est composé à l'aide des touches 12₁ à 12₅ auxquelles on attribue, pour cette opération, un chiffre. En effet, pour cette utilisation, les touches 12₁ à 12₅ correspondent aux cinq touches d'un clavier numérique standard ayant les numéros 1, 2, 3, 4 et 5. En variante, le code est indiqué à la voix et est reconnu par le serveur. Ensuite il est prévu que l'utilisateur indique, par la voix, le numéro de téléphone du mobile puis les numéros de téléphone correspondant aux touches 12₁ à 12₅.

La programmation des touches 12₁ à 12₅ est réalisée par envoi, par le serveur, d'un message SMS de données. Ce message SMS configure automatiquement les touches 12₁ à 12₅. Le message SMS envoyé au téléphone portable par le serveur contient les données suivantes : le numéro du téléphone à programmer (ou reprogrammer), l'en-tête « PRESET », le code unique d'accès aux services, le numéro de téléphone correspondant à la première touche 12₁, le numéro de téléphone correspondant à la deuxième touche 12₂, etc. A la réception du message SMS, dès la configuration effectuée, les touches 12₁ à 12₅ clignotent pendant une durée de trois secondes environ, les unes à la suite des autres pour indiquer à l'utilisateur que l'opération a été correctement effectuée.

Un second moyen de programmation consiste à commander la programmation à l'aide d'un téléphone classique du type à clavier, c'est-à-dire soit un téléphone fixe, soit un téléphone mobile. Un troisième moyen de commande de la programmation des touches 12ᵢ consiste à adresser, via le réseau IP, un message au serveur.

Une fois les touches 12₁ à 12₅ programmées, le déclenchement d'un appel requiert une première pression sur une des touches 12ᵢ qui s'allume alors, cette action étant validée, dans un délai de cinq secondes, par une pression sur la touche 14. La touche 12ᵢ clignote alors jusqu'à établissement de la connexion. Lorsque la connexion est établie, la touche reste allumée pendant une durée allant de cinq à sept secondes environ.

Toute action peut être annulée en pressant la touche 13.

Bien que le téléphone ne comporte pas de clavier classique, il peut être nécessaire de faire appel à des touches de chiffres lors d'un appel vers un serveur de type audiotel interactif. Pour permettre l'accès à de tels services, après déclenchement d'un appel, la touche 12₁ permet de d'émettre le signal DTMF 1, la touche 12₂ permet d'émettre le signal DTMF 2, etc.

Lors de la réception d'un appel, si l'un des numéros programmés correspondant à une touche « PRESET » 12ᵢ est reconnu, cette touche se met à clignoter ainsi que la touche 14. La communication s'établit grâce à une pression sur n'importe laquelle de ces deux touches. La touche 12ᵢ correspondante reste allumée pendant quelques secondes après le début de l'appel pour une vérification éventuelle de l'appelant.

Dans le cas où l'appelant ne correspond pas à un numéro affecté à une touche 12ᵢ, seule la touche 14 clignote. Après l'établissement de la communication par pression sur cette touche 14, celle-ci reste allumée pendant quelques secondes. L'utilisateur met fin à la communication en pressant la touche 13.

La touche 15 permet la réception de messages vocaux ou SMS. Cette touche correspond à un numéro préprogrammé en usine ou par un message de commande envoyé par l'opérateur.

Lorsqu'un nouveau message est destiné au téléphone, la touche 15 clignote et/ou un signal sonore est émis. Si la touche clignote, ce signal lumineux est maintenu jusqu'à une nouvelle activation de cette touche 15.

Pour accéder à la messagerie, l'utilisateur presse la touche 15 puis la touche 14 dans un délai de cinq secondes pour valider cette action. La touche 15 clignote alors jusqu'à la connexion.

Lorsque la communication avec un serveur vocal est établie, les touches 12ᵢ du téléphone mobile correspondent, comme indiqué ci-dessus, aux premières touches d'un clavier classique afin d'accéder aux services audiotel.

La réception de messages SMS est obtenue de façon vocale grâce à des moyens de transformation de messages textes en messages vocaux dans un serveur de réception de messages SMS et de renvoi vers le téléphone mobile.

Dans un exemple de réalisation, la touche 16 permet l'accès aux différents services proposés par l'opérateur. Comme pour la touche 15, cette touche correspond à un numéro préprogrammé en usine ou par un SMS de commande envoyé par l'opérateur.

Les services pouvant être proposés via cette touche « hotline » 16 sont un appel de secours, un appel permettant un LBS ou radioguidage par une hôtesse suite à l'indication par l'utilisateur de sa localisation géographique et de la localisation du point qu'il désire rejoindre, la programmation des touches 12ᵢ et le téléchargement de sonneries, de jeux ou d'autres données.

Comme pour les autres fonctions du téléphone, l'accès aux services de la touche « hotline » 16 est obtenu par pression sur cette touche, qui s'allume, puis par pression sur la touche 14, dans un délai de cinq secondes, pour valider l'appel. La touche 16 clignote alors jusqu'à établissement de la connexion. Lorsque la connexion est établie, la touche reste allumée pendant une durée de trois à cinq secondes.

Lorsque la communication avec le serveur vocal est établie, les touches 12ᵢ du téléphone mobile, qui correspondent alors aux premières touches d'un clavier standard, permettent de commander les services en envoyant des signaux DTMF. L'un des boutons 12ᵢ permet d'obtenir directement une connexion avec une hôtesse pour résoudre tout problème ou obtenir une information.

En cas d'absence de couverture du réseau par l'opérateur, la touche 16 est automatiquement basculée sur le numéro « SOS » standard.

Dans un exemple de réalisation, le téléphone est équipé d'un « Kit Mains Libres », fonction permettant à l'utilisateur de téléphoner sans nécessairement maintenir le téléphone au niveau de l'oreille, grâce à un écouteur ainsi qu'à un microphone intégré à une bandoulière.

L'utilisation du mode « Mains Libres » est obtenue par pression sur la touche 18. Dans ce cas, le haut-parleur et le microphone intégré au téléphone sont mis hors service pour mettre en marche les haut-parleurs et microphones intégrés à la bandoulière. En variante, la fonction « mains libres » activée par appui sur la touche 18, est obtenue sans moyens supplémentaires, grâce au haut-parleur intégré au téléphone et au microphone 20. Pour limiter la complexité de l'appareil, le volume du haut-parleur n'est pas réglable mais est fixé et optimisé en usine.

L'indicateur lumineux 17 permet de signaler plusieurs états selon sa couleur. Ainsi l'indicateur 17 clignote avec une lumière verte lorsque le téléphone est couvert par le réseau de l'opérateur. La couleur est orange lorsque le téléphone sort de la zone de couverture de l'opérateur. La couleur est rouge lorsque la batterie doit être rechargée. La couleur rouge peut aussi être utilisée pour signifier l'absence de carte SIM. Dans ce cas, le haut parleur émet en même temps un signal sonore spécifique.

Les sonneries du téléphone peuvent être téléchargées par réception d'un message SMS de données. Lors de la réception d'un tel message SMS, la nouvelle sonnerie est mise en mémoire tampon et est jouée une fois alors que les touches 13 et 14 clignotent alternativement. La nouvelle sonnerie est validée par pression sur la touche 14 ou rejetée par pression sur la touche 13. Le message SMS de données contenant la nouvelle sonnerie est formaté selon les spécifications « Smartmessaging » ou « Imelody ».

Afin de ne pas encombrer la mémoire, tout SMS reçu est automatiquement effacé si sa structure n'est pas reconnue par le téléphone.

## Revendications

1. Téléphone portable dépourvu de clavier de composition de numéros comportant des touches (12₁, 12₂, ..., 12₅) dont l'actionnement de chacune permet un appel vers un numéro déterminé, ces touches étant programmables, le téléphone comportant des moyens pour recevoir du réseau de télécommunication des commandes de configuration permettant d'attribuer un numéro d'appel à chacune des touches programmables, **caractérisé en ce qu'**il comporte un moyen pour émettre, par message SMS, vers un serveur, des données préenregistrées pour obtenir l'autorisation qu'un serveur ou opérateur lui adresse des commandes de configuration.

2. Téléphone portable selon la revendication 1, **caractérisé en ce qu'**il comprend une mémoire comportant un code, lié au téléphone, d'autorisation d'accès à un service de commande de configuration permettant d'attribuer un numéro d'appel aux touches programmables.

3. Téléphone portable selon la revendication 1 ou 2, **caractérisé en ce que** les moyens de réception des commandes de configurations des touches programmables comportent des moyens de réception de messages SMS.

4. Téléphone portable selon l'une des revendications 1 à 3, **caractérisé en ce qu'**il comporte des moyens pour adresser à un serveur audiotel à reconnaissance vocale, par un message vocal, les numéros d'appel correspondant aux touches programmables.

5. Téléphone portable selon l'une des revendications 1 à 4, **caractérisé en ce que** les touches dont l'actionnement permet l'appel vers un numéro déterminé présentent une partie pourvue de moyens permettant la personnalisation de ces touches à l'aide d'un symbole rappelant l'interlocuteur correspondant au numéro vers lequel la touche permet l'appel.

6. Téléphone portable selon l'une des revendications 1 à 5, **caractérisé en ce qu'**il comporte au moins une touche d'accès à des services proposés par l'opérateur, notamment une touche d'accès à des messages vocaux ou SMS.

7. Téléphone portable selon la revendication 6, **caractérisé en ce que**, lors des communications vers un serveur audiotel, les touches dont l'actionnement de chacune permet un appel vers un numéro déterminé se comportent comme les premières touches d'un clavier de composition de numéro, permettant ainsi l'utilisation des services audiotels interactifs en envoyant des signaux DTMF.

8. Téléphone portable selon l'une des revendications 1 à 7, **caractérisé en ce qu'**il est dépourvu d'écran.

9. Système pour la programmation des touches d'un téléphone portable selon l'une des revendications 1 à 4, **caractérisé en ce qu'**il comporte un serveur recevant les numéros à programmer par message vocal, par message SMS provenant d'un autre téléphone ou par un message communiqué par une voie IP.

## Claims

1. A mobile telephone, not equipped with a keypad for dialling numbers, comprising buttons (12₁, 12₂, ..., 12₅), which when individually activated enable to call a given number, such buttons being user-definable, the telephone comprising means for receiving configuration instructions from the telecommunications network to enable allocation of a telephone number to each of the user-definable buttons, **characterised in that** it comprises a means for transmitting pre-recorded data, via SMS message, to a server, in order to obtain authorisation that a server or an operator is sending the configuration instructions to it.

2. A mobile telephone according to claim 1, **characterised in that** it includes a memory comprising an authorisation code, linked to the telephone, for accessing a configuration instruction service to enable the allocation of a telephone number to each user-defined button.

3. A mobile telephone according to claim 1 or 2, **characterised in that** the means for receiving the configuration instructions for the user-defined buttons comprise means for receiving SMS data.

4. A mobile telephone according to claims 1 to 3, **characterised in that** it comprises means for sending the telephone numbers corresponding to the user-defined buttons to a voice-recognition audiotel server, via a voice message.

5. A mobile telephone according to claims 1 to 4, **characterised in that** the buttons, which when activated enable to call to a given number, are equipped with a part providing means to enable the customisation of such buttons through a symbol as a reminder of the person in relation to the number to which the user-defined button enables to call.

6. A mobile telephone according to claims 1 to 5, **characterised in that** it comprises at least one button for accessing the services proposed by the operator, particularly a button for accessing voice messages or SMS data.

7. A mobile telephone according to claim 6, **characterised in that**, when communicating with an audiotel server, the buttons, which when individually activated enable to call a given number, can be used like the initial keys of a keypad for dialling a number, hence enabling to use interactive audiotel services by sending DTMF signals.

8. A mobile telephone according to claims 1 to 7, **characterised in that** it has no display.

9. A system for programming the buttons of a mobile telephone according to claims 1 to 4, **characterised in that** it comprises a server receiving the numbers to be programmed via voice message, via SMS data from another telephone or via a message transmitted by an IP channel.

## Patentansprüche

1. Tragbares Telefon ohne Tastatur zum Wählen von Nummern, mit Tasten (12₁, 12₂, ... 12₅), deren jeweilige Betätigung einen Anruf einer vorbestimmten Nummer ermöglicht, wobei diese Tasten programmierbar sind, und das Telefon über Mittel zum Empfang von Konfigurationsbefehlen aus dem Telekommunikationsnetz verfügt, anhand derer jeder der programmierbaren Tasten eine Anrufnummer zugeordnet werden kann, und das so beschaffen ist, dass es über ein Mittel zum Senden zuvor eingespeicherter Daten, per SMS Nachricht, an einen Server verfügt, um eine Zustimmung zu erhalten, dass ein Server oder Netzbetreiber ihm Konfigurationsbefehle zukommen lässt.

2. Tragbares Telefon nach Anspruch 1, das so beschaffen ist, dass es einen Speicher mit einem Code enthält, der dem Telefon zugeordnet ist, zur Zustimmung für den Zugriff auf einen Service für Konfigurationsbefehle, mithilfe dessen es möglich ist, den programmierbaren Tasten eine Rufnummer zuzuteilen.

3. Tragbares Telefon nach Anspruch 1 oder 2, das so beschaffen ist, dass die Mittel zum Empfangen von Konfigurationsbefehlen für die programmierbaren Tasten Mittel zum Empfangen von SMS Nachrichten enthalten.

4. Tragbares Telefon nach einem der Ansprüche 1 bis 3, das so beschaffen ist, dass es Mittel zum Senden von Anrufnummern entsprechend den programmierbaren Tasten über Voice-Mail an einen Audiotel Server mit Spracherkennung enthält.

5. Tragbares Telefon nach einem der Ansprüche 1 bis 4, das so beschaffen ist, dass die Tasten, durch deren Betätigung ein Anruf zu einer vorbestimmten Nummer möglich ist, einen Abschnitt aufweisen, der mit Mitteln zur persönlichen Gestaltung dieser Tasten mittels Symbolen ausgestattet ist, die auf den Gesprächspartner hinweisen, der der Nummer entspricht, deren Anruf die jeweilige Taste ermöglicht.

6. Tragbares Telefon nach einem der Ansprüche 1 bis 5, das so beschaffen ist, dass es zumindest eine Taste für den Zugriff auf vom Netzbetreiber angebotene Dienste enthält, insbesondere eine Taste für den Zugriff auf Voice-Mails oder SMS.

7. Tragbares Telefon nach Anspruch 6, das so beschaffen ist, dass bei Kommunikationen mit einem Audiotel Server die Tasten, durch deren jeweilige Betätigung ein Anruf zu einer vorbestimmten Nummer möglich ist, sich so verhalten, wie die ersten Tasten einer Tastatur zum Wählen einer Nummer, wodurch die Verwendung von interaktiven Audiotel Diensten durch Senden von DTMF Signalen möglich wird.

8. Tragbares Telefon nach einem der Ansprüche 1 bis 7, das so beschaffen ist, dass es über keinen Bildschirm verfügt.

9. System zum Programmieren von Tasten eines tragbaren Telefons nach einem der Ansprüche 1 bis 4, das so beschaffen ist, dass es einen Server enthält, der die zu programmierenden Nummern über ein Voice-Mail, durch eine SMS Nachricht erhält, die von einem anderen Telefon oder von einer Nachricht stammt, die über ein IP Netz übermittel wurde.
